(19) Europäisches Patentamt
European Patent Office
Office européen des brevets

(11) Publication number: 0 224 130
A2

(12) # EUROPEAN PATENT APPLICATION

(21) Application number: 86115743.6

(22) Date of filing: 12.11.86

(51) Int.Cl.[4]: C 08 L 69/00
C 08 L 25/18
//(C08L69/00, 25:18), (C08L25/18, 69:00)

(30) Priority: 25.11.85 US 802119

(43) Date of publication of application:
03.06.87 Bulletin 87/23

(84) Designated Contracting States:
DE FR GB IT NL

(71) Applicant: GENERAL ELECTRIC COMPANY
1 River Road
Schenectady New York 12305(US)

(72) Inventor: Abolins, Visvaldis
15 Haddington Lane
Delmar New York 12054(US)

(72) Inventor: Aycock, David Frederick
5 Hancock Drive
Glenmont New York 12077(US)

(72) Inventor: Holub, Fred Frank
2263 Preisman Drive
Schenectady New York 12309(US)

(74) Representative: Catherine, Alain et al,
General Electric - Deutschland Munich Patent Operation
Frauenstrasse 32
D-8000 München 5(DE)

(54) **Flame resistant blends of poly-carbonate resin and an alkenyl aromatic copolymer.**

(57) Flame resistant blends containing polycarbonate resins and alkenyl aromatic copolymers are disclosed. The blends optionally contain polyphenylene ether copolymers, flame retardant activating compounds, elastomeric modifiers, and various other additives. The articles formed from the compositions of the present invention possess good mechanical properties while also displaying a high degree of flame resistance.

EP 0 224 130 A2

# FLAME RESISTANT BLENDS OF POLYCARBONATE RESIN AND AN ALKENYL AROMATIC COPOLYMER

## Background of the Invention

This invention relates to flame resistant blends, and more particularly, to flame resistant blends containing a polycarbonate resin and a multi-brominated alkenyl aromatic copolymer.

Thermoplastic polycarbonates have been extensively used in the production of various articles because of their excellent physical and chemical properties. The level of flame resistance required for many of these articles is high, and while polycarbonates themselves display some self-extinguishing properties, other materials are often blended with the polycarbonates to further improve the flame resistance of the article. For instance, in United States Patent No. 3,896,185, a nucleus-halogenated aromatic polycarbonate is blended with a rubber-modified nucleus-chlorinated styrene resin to form a flame resistant molding resin composition. However, the addition of rubber-like materials to polycarbonate resins often has an adverse effect on some of the physical properties of the finished article, such as a decrease in heat distortion temperature.

Another common problem with polycarbonates is their tendency to drip when ignited or heated above their heat distortion temperature, thereby causing the potentially flammable material to spread to other nearby structures.

From the foregoing, it can be seen that there is a need for improved flame resistant compositions having good physical properties.

It is therefore an object of this invention to provide a composition which overcomes the foregoing disadvantages.

It is a further object of this invention to provide a composition having improved flame resistance while retaining good physical properties.

It is yet another object of this invention to provide a polycarbonate-based composition which will not drip upon exposure to flame and heat.

## ~~Summary of the Invention~~

The foregoing objects are achieved by an improved flame resistant thermoplastic composition comprising:

(a) an aromatic polycarbonate homopolymer; and

(b) a copolymer of an alkenyl aromatic compound and a bromine-substituted alkenyl aromatic compound. Additionally, a flame retardant activating compound may be incorporated into the thermoplastic composition. Various modifiers comprised of elastomeric materials may also be added to improve the properties of the article. The composition may further comprise a polyphenylene ether copolymer capable of maintaining the flame resistance of the article while retaining the good physical and mechanical properties achieved by the inclusion of the polycarbonate and the elastomeric

modifier. Mineral reinforcing agents, fibers, fillers and pigments may also be included in the compositions.

The articles formed from the compositions of the present invention possess good physical and mechanical properties while also displaying a high degree of flame resistance. Furthermore, the compositions may be blended and extruded to form a wide variety of shaped materials for use in various applications, such as automotive fixtures, i.e. dashboard electrical connectors, knobs, handles, automotive interior fixtures and moldings; and electrical applications, such as tube bases, control shafts, and television deflection-yoke components.

## ~~Detailed Description of the Invention~~

The polycarbonate used in the blends of the present invention may be a homopolymer comprising repeating units of the formula

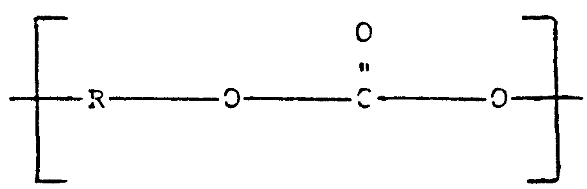

(I)

in which R is a divalent radical of an aromatic dihydroxy compound. In preferred embodiments of the present invention, the polycarbonates are obtained by reacting the aromatic dihydroxy compound with a carbonyl halide compound. The preferred polycarbonates generally comprise repeating units of the formula

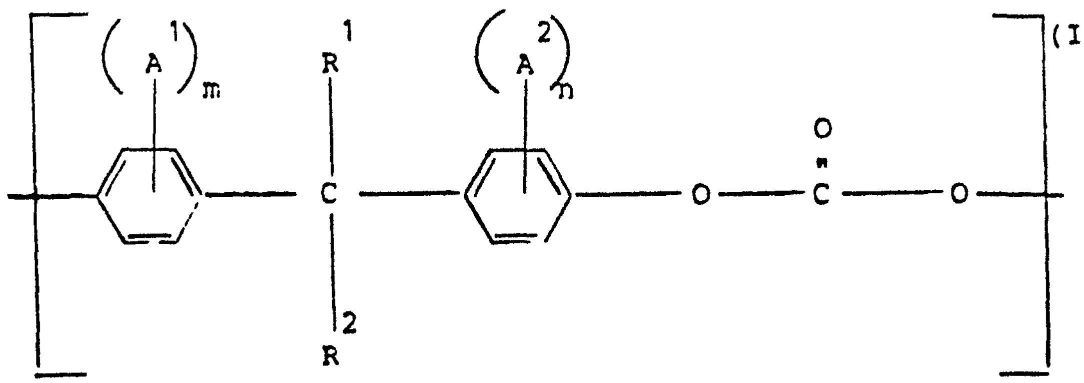 (II)

in which $R^1$ and $R^2$ are hydrogen, lower alkyl or phenyl; $A^1$ and $A^2$ are lower alkyl or lower alkenyl; and m and n are 0 or integers from 1 to the maximum number of replaceable hydrogen atoms. The term "lower" as used herein denotes a number from 1 to about 10. For example, a "lower alkyl" group may have from 1 to about 10 carbon atoms.

Examples of suitable aromatic dihydroxyl compounds are given in U.S. Patent No. 4,351,920. They include 2,2-bis(4-hydroxyphenyl)propane (commonly called bisphenol A); bis(4-hydroxyphenyl)methane; 1,1-bis(4-hydroxyphenyl)ethane; 2,2-bis(4-hydroxy-3,5-dibromophenyl)propane; 2,2-bis(4-hydroxy-3,5-dichlorophenyl)propane and various isomers thereof. Other typical aromatic dihydroxy compounds include bis(4-hydroxy-5-nitrophenyl)methane; 3,3-bis(4-hydroxyphenyl)pentane; 2,6-dihydroxy naphthalene; 2,2'-dihydroxydiphenyl sulfone; bis(4-hydroxyphenyl) sulfone; 4,4'-dihydroxy-2,5-diethoxydiphenyl ether; and 4,4'-dihydroxydiphenyl ether. Bisphenol-A is the preferred aromatic dihydroxy compound for the present invention.

A typical carbonyl halide compound suitable for the preparation of the polycarbonates of the present invention is phosgene, although various other carbonate

precursors may be used, such as carbonyl bromide, carbonate esters (e.g., diphenyl carbonate, di-(chlorophenyl) carbonate, etc.), or a haloformate.

The molecular weight of the polycarbonates used in the blends of the present invention is not critical and is generally dependent on the desired physical properties. Typically, the molecular weight of the polycarbonates used in the blends of the present invention ranges from about 10,000 to about 200,000.

The preparation of the polycarbonates is well-known in the art, and is described, for example, in U.S. Patent No. 4,351,920. Typically, the dihydroxy compound and a polymerization regulator, such as phenol or alkylated phenol, are added to a suitable solvent, e.g. methylene chloride, containing an amine solution, such as pyridine or triethylamine. As the mixture is agitated, phosgene gas is introduced until a high molecular weight product is obtained. The resulting product may be separated by induced precipitation. For example, the reaction mixture is added to an excess of a non-solvent for the polymer, such as methanol. The polycarbonate product is then recovered and dried by conventional methods. The flame resistant blends of the present invention generally contain from about 5% by weight to about 95% by weight of the polycarbonate homopolymer, depending upon the desired properties for the formed article. For instance, higher levels of the polycarbonate may be used in applications where a higher heat distortion temperature (HDT) is desired, whereas lower levels of the polycarbonate may be used when improved molding characteristics or improved flame resistance are desired. In preferred embodiments of the present invention, the flame resistant blends contain from about 5% by weight to about 85% by weight of the homopolymer.

In addition to the polycarbonate homopolymer described above, the composition of the present invention further comprises a copolymer of an alkenyl aromatic compound and a halogen-substituted alkenyl aromatic compound, generally comprising units of the formula

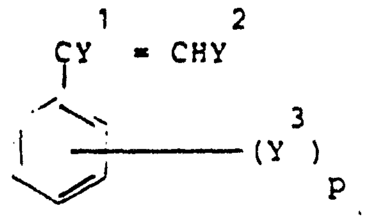

(III)

in which $Y^1$ and $Y^2$ are independently lower alkyl or alkenyl groups containing from 1 to about 6 carbon atoms or hydrogen; $Y^3$ is independently a lower alkyl or lower alkenyl group; and p is 0 or an integer from 1 to the total number of replaceable hydrogen atoms on the ring,

and units of the formula

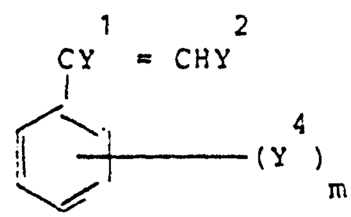

(IV)

in which $Y^1$ and $Y^2$ are as defined above; m is an integer from 2 to the total number of replaceable hydrogen atoms on the ring, and $Y^4$ is independently a bromine, a lower alkyl group, or a lower alkenyl group, provided that at least two of the $Y^4$ groups are always bromine. A typical alkenyl aromatic copolymer suitable for the present invention is comprised of dibromostyrene isomers and styrene. For

instance, a preferred copolymer comprises by weight about 67.5% styrene, about 18.7% dibromostyrene, about 1.7% monobromostyrene, about 1.6% tribromostyrene, about 9.2% of a high molecular weight cis-polybutadiene monomer, about 1.2% mineral oil, and about 0.1% of octadecyl 3,5-di-tert-butyl-4-hydroxyhydrocinnamate, commercially available as Irganox 1076, a product of the Ciba-Geigy Company. Typically, the copolymer is formed by pumping the dissolved reactants into a series of three reactors, each having controlled temperature zones, as indicated in Example 1, described below. After passing through the three reactor steps, the resulting copolymers are devolatilized and extruded into pellets. The above-described alkenyl aromatic copolymer product, hereinafter also referred to as a "dibromostyrene/styrene copolymer", has a weight average molecular weight of about 138,000, and a bromine percentage of about 13.4% by weight.

The amount of dibromostyrene/styrene copolymer contained in the composition of the present invention may range from about 5% by weight to about 95% by weight. In embodiments of the present invention which include the dibromostyrene copolymer and the aromatic polycarbonate homopolymer without the polyphenylene ether described below, it is preferred that the percentage of the copolymer range from about 15% by weight to about 95% by weight. Increases in the level of dibromostyrene/styrene copolymer within the above described range generally improve the flame resistance of the composition while causing a decrease in the heat distortion temperature of the composition, as shown in Table 1.

In preferred embodiments of the present invention, a flame retardant activating compound is included to enhance the flame retardant properties of the

dibromostyrene/styrene copolymer. Typical flame retardant activating compounds include antimony trioxide, antimony pentoxide and ferrocene. The preferred activating compound is antimony trioxide, which may comprise from about 20% by weight to about 40% by weight of the bromine in the dibromostyrene/styrene copolymer.

Various modifiers may be added to the composition to improve the properties thereof. Elastomeric polymers and copolymers typically used for thermoplastic compositions are suitable for the present invention. The elastomeric modifiers of the present invention may comprise from about 5% by weight to about 10% by weight of the total composition, and the specific level of modifier will be determined by the desired physical characteristics. For example, lower levels of the modifier may result in higher heat distortion temperatures for the compositions. A description of many of the typical types of elastomeric modifiers is found in U.S. Patent No. 4,525,508, assigned to the assignee of the present invention and incorporated by reference herein. In U.S. Patent No. 4,525,508, various elastomeric modifiers are used to enhance the properties of plasticized thermoplastic compositions used in molding applications. The modifier of the present invention is preferably an elastomeric polymer or copolymer formed from alternating polymer units of a vinyl aromatic hydrocarbon and a conjugated diene. These types of modifiers are typically polymerized by a process which utilizes sodium or lithium metals or organic derivatives thereof, as described in U.S. Patent No. 4,525,508. Exemplary commercial resins suitable for the present invention include the polystyrene-polybutadiene-polystyrene resins manufactured by the Shell Chemical Company. Especially preferred impact

modifiers include the high molecular weight and low molecular weight styrene-butadiene-styrene block copolymers from Shell Chemical Company, in which the butadiene block is hydrogenated, yielding styrene-ethylene-butylene-styrene block copolymers (SEBS). The preparation of hydrogenated block copolymers is described in U.S. Patent No. 3,431,323.

Another type of suitable modifier is the radial teleblock copolymers of a vinyl aromatic compound, a conjugated diene and a coupling, as disclosed in U.S. Patent No. 4,525,508. Hydrogenated versions of the teleblock copolymers are also suitable in the composition of the present invention.

Yet another suitable modifier is an acrylic resin modified diene rubber-containing resin, e.g. resinous compositions of poly(alkylene methacrylate) grafted onto a butadiene-styrene copolymer backbone or an acrylonitrile-butadiene-styrene terpolymer backbone, etc., as described in U.S. Patent No. 4,525,508.

Finally, another suitable modifier may be a grafted copolymer of a vinyl aromatic compound and a diene, preferably comprising from about 10% by weight to about 75% by weight of a vinyl aromatic monomer, and from about 25% by weight to about 90% by weight of a conjugated diene, as described in U.S. Patent No. 4,525,508. Typical of these grafted copolymers are those having aromatic monomers of styrene, vinyl toluene, alpha-methylstyrene, and the like, with the diene selected from isoprene, butadiene, etc.

In order to enhance the flame resistance of the composition of the present invention, while retaining good heat distortion temperature characteristics, the composition may further comprise a polyphenylene ether component. Illustrative polyphenylene ether resins are disclosed in Hay's U.S. Patent Nos. 3,306,874 and

3,306,875, White's U.S. Patent Nos. 4,140,675 and 4,234,706, among others. Other typical polyphenylene ethers are disclosed in U.S. Patent No. 4,526,917, issued to the assignee of the present invention, and incorporated by reference herein. U.S. Patent No. 4,526,917 discloses flame retardant compositions comprising mixtures of aromatic phosphates which may be added to a polyphenylene ether-based composition to increase the flame resistant characteristics thereof. The preferred polyphenylene ether for the present invention, as disclosed in U.S. Patent No. 4,526,917, is represented by the formula

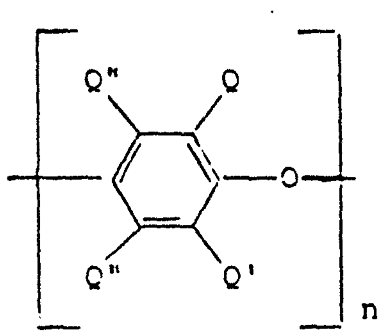

(V)

wherein the oxygen atom of one unit is connected to the benzene nucleus of the next adjoining unit; Q is a substituent selected from the group comprising hydrogen, an aromatic radical, a hydrocarbon radical, a halohydrocarbon radical having at least two carbon atoms between the halogen and the phenyl nucleus, hydrocarbonoxy radicals and halohydrocarbonoxy radicals having at least two carbon atoms between the halogen atoms and the phenyl nucleus; Q' and Q" are the same as Q and may also be a halogen with a proviso that Q, Q' and Q" are all free of a tertiary alpha-carbon atom, and n is a whole number of at least 50. Typical

phenolic monomers used to make polyphenylene ether resins conforming to the above formula are described in U.S. Patent No. 4,535,106 and include, but are not limited to: 2,6-dimethylphenol; 2,6-diethylphenol; 2,6-dilaurylphenol; 2,6-dipropylphenol; 2,6-dibutylphenol; 2,3,6-trimethylphenol; and 2,6-diethoxyphenol.

The following are some of the homopolymers which conform to the above polyphenylene ether formula and may be used in the composition of the present invention:

poly(2,6-diphenyl-1,4-phenylene)ether;
poly(2,6-dilauryl-1,4-phenylene)ether;
poly(2,6-dimethoxy-1,4-phenylene)ether;
poly(2,6-diethoxy-1,4-phenylene)ether;
poly(2,6-methoxy-6-ethoxy-1,4-phenylene)ether;
poly(2-ethyl-6-stearyloxy-1,4-phenylene)ether;
poly(2,6-dichloro-1,4-phenylene)ether;
poly(2,6-methyl-6-phenyl-1,4-phenylene)ether;
poly(2,6-dibenzyl-1,4-phenylene)ether;
poly(2,6-ethoxy-1,4-phenylene)ether;
poly(2-chloro-1,4-phenylene)ether; and
poly(2,6-dibromo-1,4-phenylene)ether.

Poly(2,6-dimethyl-1,4-phenylene)ether is the preferred homopolymer for the polyphenylene ether of the present invention. When used in conjunction with the above-described aromatic polycarbonate homopolymer and the above-described dibromostyrene copolymer, the polyphenylene ether of the present invention may comprise from about 5% by weight to about 95% by weight of the total weight of the three components, and preferably comprises from about 10% by weight to about 40% by weight. In especially preferred embodiments of the present invention, the polyphenylene ether resin comprises from about 20% by weight to about 40% by weight of the total weight of the three components, and the polycarbonate homopolymer also comprises about 20% by weight to about 40% by weight.

It will be clear to those skilled in the art that copolymers prepared from mixtures of the above-mentioned monomers corresponding to the above-described formula are also possible, such as poly(2,6-dimethyl-co-2-methyl-6-butyl-1,4-phenyene)ether and poly(2,6-dimethyl-co-2,3,6-trimethyl-1,4-phenylene)-ether.

Flame resistant compositions of the present invention may optionally include various fillers and reinforcing agents. Examples of typical fillers and reinforcing agents, some of which are given in U.S. Patent No. 4,525,508, discussed above, include talcs, aluminum silicates (clay), zinc oxide, barium sulfate, precipitated or natural calcium carbonate, zinc sulfide, glass fibers, glass spheres, carbon fibers, other metal fibers, whiskers, or particles, etc., as well as mixtures thereof. Hydrated aluminum silicate is the preferred filler for the present invention, and the amount used in the composition is dictated by the end use of the article. Typically, the filler is present at about 10% to about 30% by weight of the total composition.

Various pigments may also be incorporated into the composition of the present invention so as to impart color to the resulting article. A wide variety of pigments are suitable for the present invention, such as titanium dioxide, and their inclusion will be governed by the color desired for the finished article.

It will be understood by those skilled in the art that many combinations of all of the above ingredients are within the scope of the present invention. For instance, the polycarbonate homopolymer and the dibromostyrene/styrene copolymer may be combined with an elastomeric modifier and a flame retardant activating compound (without a polyphenylene ether) in those

instances in which very high heat distortion temperatures are not required. Also, the polycarbonate homopolymer and the dibromostyrene/styrene copolymer may be combined with a polyphenylene ether, excluding an elastomeric modifier and/or a flame retardant activating compound, in those instances in which very high levels of toughness and/or flame resistance are not required.

It will also be understood to those skilled in the art that additional ingredients may be added to the above-described composition in order to adjust various chemical and physical properties. Some of the additives which may be added include plasticizers, antioxidants, stabilizers, processing aids, and antistatic agents. The amount of each of these additives will depend upon the particular properties desired in the completed article.

The compositions of the present invention may be prepared for use simply by mixing the ingredients in any sequence at room temperature and then at temperatures up to about 300°C. Finished articles may be processed from the resulting mixtures by any of the well-known methods, such as extrusion, blow molding, compression molding, shaping, injection molding, etc.

The following examples describe typical compositions of the present invention. They are intended for illustrative purposes of specific embodiments only and should not be construed as a limitation upon the broadest aspects of the invention.

EXAMPLES 1-5

The compositions of Samples 1 - 5 were formed from the ingredients listed in Table 1 by mixing the ingredients at room temperature according to the listed ratios, shown in parts by weight. Samples 2 - 4 are within the

scope of the present invention, while Samples 1 and 5 are outside the scope of the present invention and are shown for purposes of comparison. The dibromostyrene/styrene copolymer was made from a homogeneous solution consisting of, by weight, 62% styrene, 11.43% toluene, 15.3% dibromostyrene, 1.39% monobromostyrene, 1.31% tribromostyrene, 7.5% Taktene 1202 (a high molecular weight cis-polybutadiene manufactured by the Polysar Corporation), 1% mineral oil, and 0.07% Irganox 1076 (octadecyl 3,5-di-tert-butyl-4-hydroxyhydrocinnamate, a product of the Ciba-Geigy Company). The properties of the copolymer are as follows:

Weight average molecular weight: 138,000 (polystyrene equivalent GPC molecular weight);
Number average molecular weight: 57,500;
% Gel: 23.2;
Swell Index: 22.7;
% Bromine: 13.4.

The polycarbonate used in the examples was made from Bisphenol A and phosgene by methods well-known in the art.

The samples were extruded at 232°C and then injection molded at about 190°C-230°C. After being cooled, the articles were subjected to the tests listed in Table 1.

The flammability tests used for each sample are known in the art and are described in U.S. Patent No. 4,497,925. Two samples of each composition, each having dimensions of 2.5" x 0.5" x 0.125" (6.35 cm x 1.27 cm x 0.318 cm), are subjected to at least two successive 10-second ignitions from a Bunsen burner. If the samples do not extinguish themselves within 30 seconds after ignition, they are deemed "normally flammable". "Propagation" as used in these tests is a

rough measure of the tendency of the flame to spread along the surface of the material. In the Horizontal Burn Test, the article being tested is held in a horizontal position while being contacted with the Bunsen burner flame, while in the Vertical Burn Test, the article is held in a vertical position while being contacted with the flame.

Test results for Examples 1 - 5 (two samples each) are as follows:

TABLE 1

COMPOSITIONS CONTAINING POLYCARBONATE HOMOPOLYMER AND DIBROMOSTYRENE/STYRENE COPOLYMER; RELATED TEST RESULTS

| SAMPLE NO. | 1 | 2 | 3 | 4 | 5 |
|---|---|---|---|---|---|
| Dibromostyrene Copolymer | 0 | 25 | 50 | 75 | 100 |
| Polycarbonate Homopolymer | 100 | 75 | 50 | 25 | 0 |
| $Sb_2O_3$ | 7 | 7 | 7 | 7 | 7 |
| Titanium Oxide | 3 | 3 | 3 | 3 | 3 |
| Horizontal Burn Test | | | | | |
| D,ND | ND,ND | ND,ND | ND,ND | ND,ND | ND,ND |
| Flame Propagation (inches/30 sec) | NP,NP | NP,NP | NP,NP | NP,NP | NP,NP |
| Vertical Burn Test | | | | | |
| D,ND | D,D | ND,ND | ND,ND | ND,ND | ND,ND |
| Sec. to Quench 1st Ig. | 3,3 | 0,0 | 0,0 | 0,0 | 0,0 |
| Sec. to Quench 2nd Ig. | 7,9 | 2,3 | 0,0 | 0,0 | 0,0 |
| Heat Distortion Temperature ($^{o}F$/264psi) | 269 | 251 | 214 | 197 | 176 |
| Flexural Strength (X1000 psi) | 6.49 | 8.27 | 7.57 | 7.06 | 4.77 |
| Flexural Modulus (X1000 psi) | 378 | 356 | 319 | 299 | 252 |

ND = No Drip
D = Drip
NP = No Propagation

As shown in Table 1, Samples 2, 3 and 4 exhibited excellent flame resistance while retaining very good heat distortion temperature characteristics. Furthermore, none of the samples exhibited dripping or flame propagation.

## Examples 6 - 8

The compositions of Samples 6 - 8 are also within the scope of the present invention. In addition to the components in Samples 1 - 5, the compositions of Samples 6 - 8 include a polyphenylene ether component and an elastomeric modifier. The ingredients listed in Table 2 were mixed at room temperature according to the listed ratios. The compositions of the dibromostyrene/styrene copolymer and the polycarbonate homopolymer resin were the same as in Examples 1 - 5. The polyphenylene ether resin was based on poly(2,6-dimethyl-1,4-phenylene) ether. The elastomeric modifier was SEBS, described above and manufactured by the Shell Chemical Company. The polyphenylene ether resin and the polycarbonate resin were first preblended and extruded at about 260°C - 288°C. The rest of the ingredients were then thermally blended with the preblended material at about 270°C - 320°C. The product was then injection molded at 210°C - 240°C.

After cooling, the resulting articles (two samples each) were subjected to the tests described above and listed below in Table 2.

TABLE 2

COMPOSITIONS CONTAINING POLYCARBONATE HOMOPOLYMER, DIBROMOSTYRENE/STYRENE COPOLYMER, POLYPHENYLENE ETHER AND AN ELASTOMERIC MODIFIER; AND RELATED TEST RESULTS

| SAMPLE No. | 6 | 7 | 8 |
|---|---|---|---|
| Dibromostyrene Copolymer | 25 | 50 | 75 |
| Polyphenylene Ether Resin | 37.5 | 25 | 12.5 |
| Polycarbonate Homopolymer | 37.5 | 25 | 12.5 |
| $Sb_2O_3$ | 7 | 7 | 7 |
| Titanium Oxide | 3 | 3 | 3 |
| SEBS | 10 | 10 | 10 |
| Horizontal Burn Test (1/8 inch) | | | |
| D,ND | ND,ND | ND,ND | ND,ND |
| Propagation (inches/30 sec) | 1/4",1/4" | NP,NP | NP,NP |
| Vertical Burn Test (1/8 inch) | | | |
| D,ND | ND,ND | ND,ND | ND,ND |
| Sec. to Quench 1st Ig. | 2,2 | 0,0 | 0,0 |
| Sec. to Quench 2nd Ig. | 5,3 | 2,2 | 0,0 |
| Flexural Strength (X1000 psi) | 9.72 | 10.6 | 8.58 |
| Flexural Modulus (X1000 psi) | 259 | 281 | 273 |
| Heat Distortion Temperature °F/264psi) | 219 | 184 | 147 |

D = Drip
ND = No Drip
NP = No Propagation

As is readily apparent from Table 2, each of the samples exhibited excellent flame resistance, since none of the quench times for first and second ignitions exceeded five seconds. Furthermore, only Sample 6 exhibited any horizontal flame propagation, with the flame spreading a distance of 1/4 inch in 30 seconds. This degree of flame propagation is still low enough for many industrial applications for the composition of the present invention. Moreover, while Sample 8, containing 12.5% of the polycarbonate resin and 12.5% of the polyphenylene ether resin (based on total weight of polyphenylene ether, dibromostyrene/styrene copolymer, and polycarbonate), exhibited a heat distortion temperature which may be suitable for limited industrial applications, the data clearly demonstrates that the heat distortion temperature of the composition may be raised by increasing the amount of the polycarbonate resin and the polyphenylene ether resin, and excellent flame resistance is still retained.

The compositions of the present invention may be used to form molded articles having excellent flame resistance while also exhibiting excellent mechanical properties, such as heat distortion temperature and flexural strength. Furthermore, the blended compositions are readily metallized and painted, and are thus especially suitable for the interior moldings and fixtures of automobiles.

While the invention has been described with respect to preferred embodiments, it will be apparent that certain modifications and changes can be made without departing from the spirit and scope of the invention and, therefore, it is intended that the foregoing disclosure be limited only by the claims appended hereto.

What is claimed is:

1. A flame resistant thermoplastic composition comprising:

(a) an aromatic polycarbonate homopolymer; and

(b) a copolymer of an alkenyl aromatic compound and a bromine-substituted alkenyl aromatic compound.

2. A composition according to Claim 1 comprising from about 5% to about 95% of component (a), and from about 5% to about 95% of component (b), based on the combined weight of components (a) and (b).

3. The composition of Claim 1 comprising from about 5% to about 85% of component (a), and from about 15% to about 95% of component (b), based on the combined weight of components (a) and (b).

4. The composition of Claim 1 wherein the aromatic polycarbonate homopolymer is obtained by reacting an aromatic dihydroxy compound with a carbonyl halide compound.

5. The composition of Claim 4 wherein the aromatic dihydroxy compound is 2,2-bis(4-hydroxyphenyl)propane, and the carbonyl halide compound is phosgene.

6. The composition of Claim 1 further comprising an additive selected from the group consisting of fillers, reinforcing agents, pigments, and mixtures thereof.

7. The composition of Claim 1 further comprising a flame retardant activating compound.

8. The composition of Claim 7 wherein the flame retardant activating compound is selected from the group consisting of antimony trioxide, antimony pentoxide and ferrocene.

9. The composition of Claim 7 further comprising an additive selected from the group consisting of fillers, reinforcing agents, pigments, and mixtures thereof.

10. The composition of Claim 1 further comprising an elastomeric modifier.

11. The composition of Claim 10 further comprising a flame retardant activating compound.

12. The composition of Claim 10 wherein the elastomeric modifier is an elastomeric polymer or copolymer.

13. The composition of Claim 10 wherein the elastomeric modifier is a hydrogenated styrene-butadiene-styrene block copolymer.

14. The composition of Claim 1 wherein the copolymer of component (b) comprises units of the formula

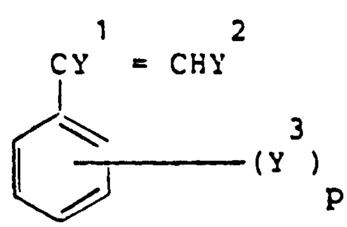

in which $Y^1$ and $Y^2$ are independently lower alkyl or alkenyl groups containing from 1 to about 6 carbon

atoms, or hydrogen; $Y^3$ is independently a lower alkyl or lower alkenyl group; and p is 0 or an integer from 1 to the total number of replaceable hydrogen atoms on the ring,

and units of the formula

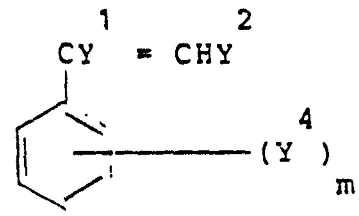

in which $Y^1$ and $Y^2$ are as defined above; m is an integer from 2 to the total number of replaceable hydrogen atoms on the ring; and $Y^4$ is independently a bromine, a lower alkyl group or a lower alkenyl group, provided at least two of the $Y^4$ groups are always bromine.

15. The composition of Claim 14 wherein component (b) is a copolymer comprised of dibromostyrene isomers and styrene.

16. The composition of Claim 1 further comprising a polyphenylene ether of the formula

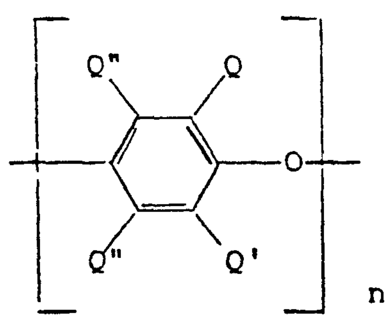

wherein the oxygen atom of one unit is connected to the benzene nucleus of the next adjoining unit; Q is a substitutent selected from the group consisting of

hydrogen, an aromatic radical, a hydrocarbon radical, a halohydrocarbon radical having at least two carbon atoms between the halogen and the phenyl nucleus, hydrocarbonoxy radicals and halohydrocarbonoxy radicals having at least two carbon atoms between the halogen atom and the phenyl nucleus; Q' and Q" are the same as Q and may also be a halogen with the proviso that Q, Q' and Q" are all free of a tertiary alpha-carbon atom, and n is a whole number of at least 50.

17. The composition of Claim 16 comprising from about 5% to about 95% of the polyphenylene ether, based on the combined weights of components (a), (b) and the polyphenylene ether.

18. The composition of Claim 16 comprising from about 10% to about 40% of the polyphenylene ether, based on the combined weights of components (a), (b) and the polyphenylene ether.

19. The composition of Claim 16 comprising about 20% to about 40% of the polyphenylene ether and about 20% to about 40% of the polycarbonate homopolymer, based on the combined weights of components (a), (b) and the polyphenylene ether.

20. The composition of Claim 16 further comprising a flame retardant activating compound.

21. The composition of Claim 20 wherein the flame retardant activating compound is selected from the group consisting of antimony trioxide, antimony pentoxide and ferrocene.

22. The composition of Claim 20 further comprising an elastomeric modifier.

23. The composition of Claim 22 further comprising an additive selective from the group consisting of pigments, fillers, reinforcing agents, and mixtures thereof.

24. The composition of Claim 23 wherein the pigment is titanium dioxide.

25. The composition of Claim 16 further comprising an elastomeric modifier.

26. The composition of Claim 25 wherein the elastomeric modifier is a hydrogenated styrene-butadiene-styrene block copolymer.

27. The composition of Claim 25 further comprising an additive selected from the group consisting of fillers, reinforcing agents, and mixtures thereof.

28. The composition of Claim 27 wherein the additive is selected from the group consisting of aluminum silicate, talc, titanium dioxide, silica, glass and mixtures thereof.

29. The composition of Claim 16 wherein the copolymer comprises units of the formula

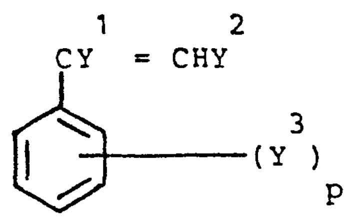

in which $Y^1$ and $Y^2$ are independently lower alkyl or alkenyl groups containing from 1 to about 6 carbon atoms, or hydrogen; $Y^3$ is independently a lower alkyl or lower alkenyl group; and p is 0 or an integer from 1 to the total number of replaceable hydrogen atoms on the ring,

and units of the formula

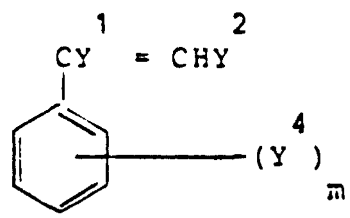

in which $Y^1$ and $Y^2$ are as defined above; m is an integer from 2 to the total number of replaceable hydrogen atoms on the ring; and $Y^4$ is independently a halogen, a lower alkyl group or a lower alkenyl group, provided at least two of the $Y^4$ groups are always bromine.

30. The composition of Claim 29 wherein the copolymer is comprised of dibromostyrene isomers and styrene.

31. The composition of claim 29 further comprising an elastomeric modifier.

32. The composition of Claim 31 wherein the elastomeric modifier is an elastomeric polymer or copolymer.

33. The composition of Claim 32 wherein the elastomeric copolymer is formed from alternating polymer

units of a vinyl aromatic hydrocarbon and a conjugated diene.

34. The composition of Claim 31 wherein the elastomeric modifier is a hydrogenated styrene-butadiene-styrene block copolymer.